# EUROPEAN PATENT APPLICATION

(11) **EP 1 117 238 A2**
(43) Date of publication of application: **18.07.2001**
(21) Application number: 01850008.2
(22) Date of filing: 11.01.2001
(51) Int. Cl.: H04M 3/51, H04Q 7/20

(54) **System and method for exclusively wireles call center operation**

(30) Priority: 11.01.2000 US 480394
(71) Applicant: Telefonaktiebolaget L M Ericsson (Publ), 126 25 Stockholm (SE)
(72) Inventor: Andersson, Jason, 138 33 Alta (SE); Hinton, Mike, Irvine, CA 92650 (US)
(74) Representative: Hammar, Ernst

(57) **Abstract**

A system (100) providing concurrent data and telephony call center communications over a single wireless infrastructure is disclosed, comprising a switching module (102) interfacing the call center to an external communications network (112); a data network (114) communicatively coupled to the switching module and providing access to various data structures (116) and applications (118); a wireless base station module (104) communicatively coupled to the switching module and adapted to establish a wireless access area (120); a portable user device (124) adapted to administrate call center data and telephony applications; and a communications module (202) within the user device, interfacing the user device with the base station module and the rest of the system.

## Description

### TECHNICAL FIELD OF THE INVENTION

The present invention relates generally to personal productivity and data communication systems in call center environments and, in particular, to a system and method by which voice and data communications are administrated conjointly through a singular, exclusively wireless infrastructure.

### BACKGROUND

The usage of, and demand for, wireless communications continue to increase at a staggering rate. Wireless communication systems provide users with numerous advantages over non-wireless (wire-based) systems. Enterprise system designers and users are constantly seeking new ways to improve and expand their products and services using wireless communications. This ever-increasing demand has driven the wireless adaptation of traditionally non-wireless systems.

Previously, the evolution of wireless data and telephony technology for enterprises has clashed with, rather than complemented, incumbent wire-based data and telephony infrastructure. Consequently, when both wireless voice and data communications were required, two parallel, independent infrastructures had to be implemented - one for wireless telephony and one for wireless data communication. Thus, cost and performance advantages usually associated with the use of wireless technology were diminished or negated by equipment redundancy (e.g. wiring a multitude of base stations) and/or mixed (wireless and wire-based) equipment overhead.

For example, in a typical call center operation both telephony and data communication systems are required. Telephony systems receive and route calls to an individual unit (typically a handset), where an agent (e.g. operator, user) typically researches and/or records call information via data systems. Thus, each agent requires simultaneous access to both telephony and data communication. Usually, agents require hands-free voice operation; allowing them to operate the data system or to manually research and record information.

Generally, conventional systems have implemented two parallel, independent infrastructures - one for voice communications (telephony), and one for data communications. Typically, these systems have either used a wireless voice system in combination with a wireless data system or a mixture of wire-based and wireless customer premise equipment (CPE). Such CPE may include, for example, conventional wireless handsets and telemetry equipment. Each agent thus required two distinct devices, a voice console and a data console. Most often data consoles were wire-based. Voice consoles could have been wire-based or wireless; but where an agent had a wireless voice handset, a wire-based connection was still required for an attached hands-free headset.

Conventional systems were thus limited in capacity and operational robustness. For example, a typical base station is configured to provide four, eight, or twelve slots for individual voice consoles. Increasing the number of voice consoles in a particular area required the addition of more base stations. This resulted in increased infrastructure and support costs as well as increased system overhead. Additionally, because of separate voice and data systems, base station capacity was not shared between voice and data communication to optimize overall system usage. Where mixed technology for voice and data was implemented, increased infrastructure/support costs and system overhead again resulted. From an agent's perspective, such systems were cumbersome and restrictive; inhibiting personal mobility and operational flexibility. With conventional systems, an agent typically required three distinctive devices to operate: a handset, a computer, and a headset. Business enterprises using such conventional systems were faced with capital-intensive infrastructure and support, and bounded system adaptability.

### SUMMARY OF THE INVENTION

From the foregoing, we recognize that a need exists for a cost-effective and operationally flexible system providing combined wireless voice and data communication with a single, exclusively wireless infrastructure. It is desirable that such a system combine, to the greatest degree possible, voice and data operations to reduce system equipment and operational overhead. It is further desirable that such a system provide optimal agent mobility and efficiency; minimizing agent console equipment and restrictive requirements thereof. It is believed that the system of the present invention described herein solves these problems and concerns; overcoming limitations associated with conventional systems.

In the present invention, a wireless call center system provides consolidated media, data, and telephony communications over a single wireless infrastructure. The present invention provides a system having one common user device, which is wireless, for administrating all media (telephony and data) application control. By consolidating handset and data terminal functionality, the present invention simplifies media application development and use. Agents may combine a wireless headset with the wireless user device; providing an optimum degree of mobility and operational efficiency. The present invention thus eliminates redundant and mixed technology infrastructure; simplifying . infrastructure development and use, and reducing capital-intensive investment.

In one embodiment of the present invention, a system provides concurrent data and telephony call center communications over a single wireless infrastructure. The system provides a switching module interfacing the call center to an external communications network; a data network communicatively coupled to the switching module and providing access to various database applications; a wireless base station module communicatively coupled to the switching module and adapted to establish a wireless access area; a portable user device adapted to administrate call center data and telephony applications; and a communications module within the user device, interfacing the user device with the base station module and the rest of the system.

### BRIEF DESCRIPTION OF THE DRAWINGS

For a better understanding of the invention, and to show by way of example how the same may be carried into effect, reference is now made to the detailed description of the invention along with the accompanying figures in which corresponding numerals in the different figures refer to corresponding parts and in which:
FIG. 1 is a schematic illustrating one embodiment of a call center system according to the present invention; and
FIG. 2 is a schematic illustrating one embodiment of a wireless user device according to the present invention.

### DETAILED DESCRIPTION

The present invention defines a wireless call center system providing consolidated media (data and telephony) communicatíons over a single wireless infrastructure. The present invention provides system having a common wireless user device for administrating all media application control. By consolidating handset and data terminal functionality, the present invention simplifies media application development and use. The present invention further provides cost effective and operationally efficient call center development and operation. It shou voice and data communications utilize or require separate infrastructures. The teachings of this disclosure may be applied to adapt a variety of system topologies and operations. For purposes of explanation and illustration, the present invention is hereafter described in reference to a business enterprise call center operation.

As previously noted, the present invention eliminates redundant infrastructure and mixtures of wire-based and wireless CPE equipment within an organization. Unlike conventional systems and methods, the present invention provides telephony and terminal media (e.g. voice, data, Internet Protocol packetized voice and data) control over an exclusively wireless infrastructure,

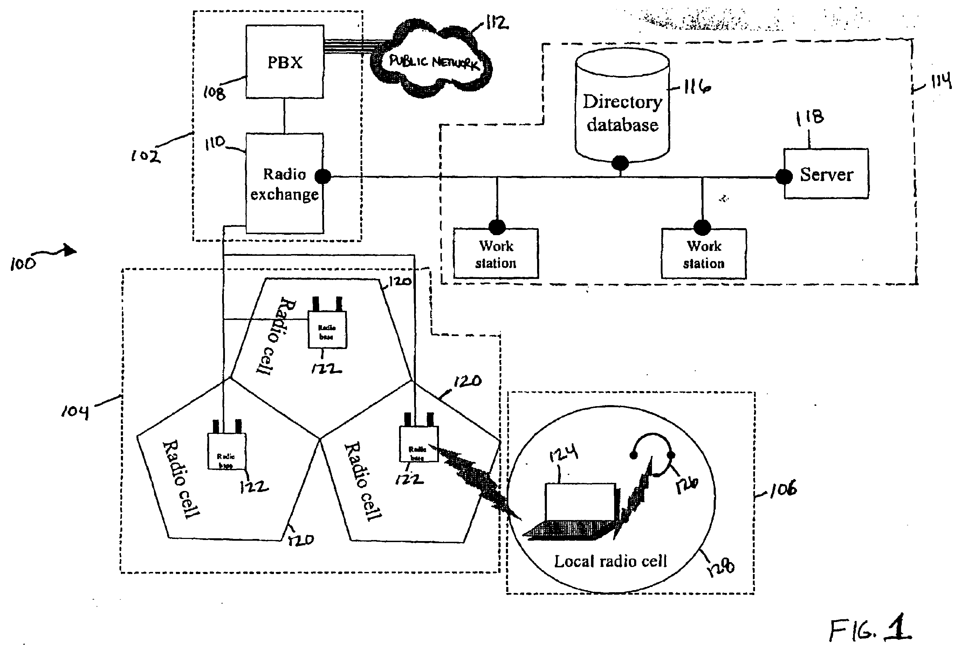

Figure 1 presents an illustrative embodiment of a call center system 100 according to the present invention. System 100 comprises three component areas: a switching module 102, a base station module 104, and a device module 106. Module 102 comprises a switching infrastructure having a private branch exchange (PBX) 108 coupled to a radio exchange 110. PBX 108 may interface system 100 to a public network 112 (e.g. a public switched telephony network). PBX 108 may be configured to address traditional enterprise telephony requirements, but is not limited solely to that application in the present invention. PBX 108 may also include call center applications distributing communications in a wide variety of ways. One possibility is automatic call distribution, using a skill based routing scheme to find the most suitable agent available.

Radio exchange 110 may function as a central hub for both voice and data; serving as a connection point for a variety of members within system 100. Exchange 110 administrates the whereabouts of the wireless devices throughout system 100; and functions as the connection point for base stations in module 104 and a local area network (LAN) 114. Connection to LAN 114 provides system 100 communicative access to a variety of data and applications, such as Directory Database 116, residing on devices, such as server 118, within LAN 114. Exchange 110 may be adapatably configured to suit design and performance requirements of a particular system; having both hardware (e.g. couplings to radio bases or the LAN) and software constituents. Exchange 110 may be integrated (e.g. as a hardware board) into PBX 108; or may be configured as a stand-alone structure (e.g. a server).

Base station module 104 comprises at least one, but usually multiple, wireless radio cells 120. Radio cells 120 are arranged to provide a desired telemetry area with wireless access to both data and voice aspects of system 100. Each radio cell 120 comprises a radio base station 122, which is communicatively linked (either hard-wired or wireless) with exchange 110. By setting up a number of base stations 122 in a given area, that area is covered by cells 120; providing wireless mobility and roaming functionality (i.e. moving between radio cells). The radio base stations may be implemented by any suitable contrivance providing voice and data communication in accordance with the present invention.

Device module 106 comprises a wireless user device 124. Device 124 may be used in combination .with wireless headset 126; establishing a local radio cell 128. Cell 128 defines the range from device 124 within which an agent using headset 126 may move about and operate freely and unrestricted. Device 124 administrates call control functions; such as Answer Call, Make Call, Transfer Call and Hang-Up. Conjointly, device 124 provides data access and an application environment. One example of an application that may be implemented by device 124 is directory access. A Directory Access application may be used by an agent to search for internal and external phone numbers in directory database 116. Once a desired number is located in database 116, device 124 executes telephony functions required to make the call.

According to the present invention, device 124 may be implemented in a variety of ways using a variety of configurations. For example, device 124 may comprise a personal computer (PC) or personal digital assistant (PDA).

Headset 126 provides for an agent's speech input and output with device 124. The headset provides actual voice connection to device 124 with a speaker and a microphone. Alternatively, an agent may use only device 124 without a headset; wherein device 124 is configured to transceive speech data (e.g. outfitted with a speaker and microphone).

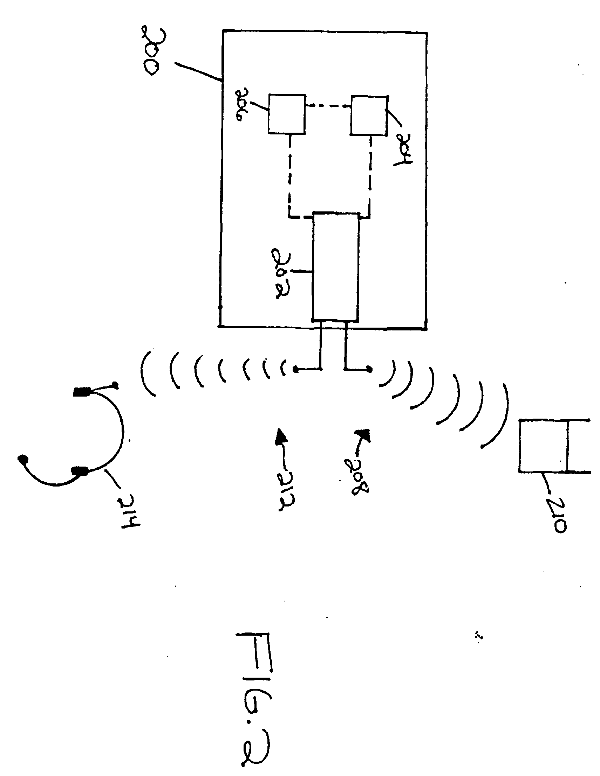

Referring now to Figure 2, a more detailed illustration of an exemplary wireless user device 200 according to the present invention is depicted in operation within a radio cell. Device 200 may comprise a portable terminal with data processing capability; such as a laptop PC, PDA, or other handheld computer. Communications module 202 is installed or inserted in device 200; communicatively linking with processor 204 and storage 206 components within device 200. Module 202 may comprise a card or board - utilizing on GSM (Global System for Mobile communications), DECT or other suitable communication protocols - providing wireless data and voice communication 208 with a radio base station 210. Device 200 may have telephony applications installed therein or remotely accessible via module 202. Optionally, module 202 may be adapted to provide voice communication 212 with a wireless user headset 214. For example, module 202 may be adapted to utilize Bluetooth or similar infra-red connection to a wireless headset 214. Alternatively, a second communication module, solely dedicated to providing headset communication, may be installed in device 200.

Incoming call traffic may be processed in a variety of ways by the present invention. Generally, as a call center receives an incoming call to be directed to a particular wireless user device, that call comes through the public network into the PBX and transfers through the radio exchange to a radio cell where the wireless user device is roaming. The call is transferred to the wireless user device which, through its telephony application, answers the call. Call data is converted to and from headset voice data via the wireless connection between the headset and the wireless user device.

The present invention also provides a number of dialing and outbound call options, Several examples of such call options are now discussed in reference to Figure 1. In a manual dialing scenario, a user utilizes a telephony application on device 124 to initiate an outgoing call. The outgoing call then processes sequentially through station 122, exchange 110, and PBX 108; connecting with network 112.

In another scenario, a user utilizes voice enabled dialing through headset 126. Through headset 126, the user instructs a dialing application on device .124 as to which numbers to dial; and device 124 utilizes a telephony application to initiate a corresponding outbound call. As with manual dialing, the outbound call processes sequentially through station 122, exchange 110, and PBX 108; connecting with network 112.

A directory dialing scenario utilizes an directory dialing application on device 124; where a user searches database 116 for an internal (i.e. serviced within the PBX) or an external "name" entry (i.e. a particular person and or phone number). The directory dialing application may utilize either an integrated or an independent telephony application on device 124 to dial the number associated with the desired "name" (i.e. "name dialing"); initiating an outgoing call. The outgoing call then processes sequentially through station 122, exchange 110, and PBX 108; connecting with network 112.

A voice enabled search scenario allows a user to perform directory dialing using voice commands through headset 126. As the user speaks desired name for searching, a voice search application on device 124 interacts with a directory dialing application (as described above) to locate the desired database entry. The voice search application may be integrated with or separate from the directory dialing application. The outbound call, to the desired phone number, is initiated and processed as described above.

This invention thus offers a solution to combined wireless voice and data in the context of personal productivity in a call center environment. The present invention provides: a single wireless infrastructure; call control and processing on exclusively wireless devices; exclusively wireless technology for system data interaction; simplified directory access applications; and optimum agent mobility and flexibility. It should be apparent that the present invention provides a variety of easy-to-install enterprise systems that were, using conventional systems and methods, commercially unviable.

The embodiments and examples set forth herein are presented to best explain the present invention and its practical application and to thereby enable those skilled in the art to make and utilize the invention. However, those skilled in the art will recognize that the foregoing description and examples have been presented for the purpose of illustration and example only. The description as set forth is not intended to be exhaustive or to limit the invention to the precise form disclosed. Many modifications and variations are possible in light of the above teaching without departing from the spirit and scope of the following claims.

## Claims

1. A method of providing simultaneous data and telephony communications over a wireless infrastructure, comprising the steps of:
providing a switching module, interfaced with an external telephony network and a data network;
providing a wireless base station module communicatively coupled to the switching module; and
providing a single, portable, wireless user device communicatively interfaced with the wireless base station module and adapted to administrate applications utilizing the data and external telephony networks.

2. The method of claim 1 wherein the wireless infrastructure services a call center operation.

3. The method of claim 1 wherein the step of providing a wireless base station module further comprises providing a plurality of wireless base stations communicatively coupled to the switching module, each base station module establishing its own telemetry area.

4. The method of claim 3 wherein the wireless base stations are configured such that their telemetry areas provide continuous wireless access over a desired work area.

5. The method of claim 3 wherein the step of providing a switching module further comprises the steps of:
providing a private branch exchange communicatively coupled to the external telephony network; and
providing a radio exchange, communicatively coupled to the private branch exchange, the data network, and the wireless base station module.

6. The method of claim 3 wherein the step of providing a wireless user device further comprises providing a communications module installed within the wireless user device to communicatively interface the wireless user device with the wireless base station module.

7. The method of claim 6 wherein the step of providing a wireless user device further comprises providing data processing and telephony applications, accessible and controllable via the wireless user device.

8. The method of claim 7 wherein the step of providing a wireless user device further comprises providing a laptop computer for use as the wireless user device.

9. The method of claim 7 wherein the step of providing a wireless user device further comprises providing a hand held computer for use as the wireless user device.

10. A wireless call center communications system comprising:
a switching module communicatively coupled with an external telephony network and a data network;
a wireless base station module communicatively coupled to the switching module; and
a portable wireless user device communicatively interfaced with the wireless base station module, adapted to administrate applications utilizing the data and external telephony networks.

11. The system of claim 10 wherein the switching module further comprises:
a private branch exchange communicatively coupled to the external telephony network; and
a radio exchange, communicatively coupled to the private branch exchange, the data network, and the wireless base station module.

12. The system of claim 11 wherein the wireless base station module further comprises a plurality of wireless base stations communicatively coupled to the switching module.

13. The system of claim 12 further comprising a communications module installed within the wireless user device to communicatively interface the wireless user device with the wireless base station module.

14. The system of claim 13 further comprising data processing and telephony applications operationally accessible by the wireless user device.

15. The system of claim 14 wherein the wireless user device further comprises a laptop computer.

16. The system of claim 14 wherein the wireless user device further comprises a hand held computer.

17. The system of claim 13 further comprising a user headset communicatively coupled to the wireless user device.

18. The system of claim 17 wherein the user headset is wireless.

19. The system of claim 18 wherein the user headset is wirelessly coupled to the wireless user device via the communications module.

20. A method of providing concurrent data and telephony communications over a solitary wireless infrastructure in a call center environment, comprising the steps of:
providing a switching module, adapted to interface the call center environment to an external communications network;
providing a data network communicatively coupled to the switching module;
providing a wireless base station module communicatively coupled to the switching module and adapted to establish a wireless access area;
providing a single, portable user device adapted to administrate data and telephony applications;
providing a communications module within the user device communicatively interfacing the user device with the base station module; and
operating the user device to administrate telephony and data communications with the data and external communications networks.
